# EUROPÄISCHE PATENTSCHRIFT

(11) **EP 2 855 002 B1**
(45) Veröffentlichungstag und Bekanntmachung des Hinweises auf die Patenterteilung: **12.07.2017**
(21) Anmeldenummer: 13710792.6
(22) Anmeldetag: 20.03.2013
(51) Int. Cl.: B01F 15/04, B01F 3/08, G05D 11/13, B01F 15/02

(54) **VERFAHREN UND VORRICHTUNG ZUM MISCHEN WENIGSTENS ZWEIER FLÜSSIGER KOMPONENTEN**
METHOD AND DEVICE FOR MIXING AT LEAST TWO LIQUID COMPONENTS
PROCÉDÉ ET DISPOSITIF POUR MÉLANGER AU MOINS DEUX COMPOSANTS LIQUIDES

(30) Priorität: 29.05.2012 DE 102012010544
(43) Veröffentlichungstag der Anmeldung: 08.04.2015
(73) Patentinhaber: J. Wagner AG, 9450 Altstätten (CH)
(72) Erfinder: LUTZ, Gilbert, CH-9451 Kriessern (CH); MANSER, Josef, CH-9050 Appenzell (CH)
(74) Vertreter: Schmid, Nils T.F.
(86) Internationale Anmeldenummer: PCT/EP2013/000848
(87) Internationale Veröffentlichungsnummer: WO 2013/178306

(56) Entgegenhaltungen:
- CH-A- 369 910
- DE-A1- 10 121 950
- US-A- 3 869 067
- US-A1- 2006 035 381

## Beschreibung

Die Erfindung betrifft ein Verfahren und eine Vorrichtung zum Mischen wenigstens zweier flüssiger Komponenten. Insbesondere ist Gegenstand der Erfindung ein Verfahren und eine Vorrichtung zum Mischen wenigstens zweier flüssiger Komponenten eines Zwei- oder Mehrkomponentennassbeschichtungssystems und ein Zwei- oder Mehrkomponentenmischer eines Zwei- oder Mehrkomponentennassbeschichtungssystems. Ein derartiges Verfahren wird beispielsweise in einer Zweikomponentenlackieranlage im Nassbereich verwendet, bei der hydraulische Verhältnisse mit einem Förderdruck der flüssigen Komponenten von beispielsweise 50 bis 530 bar, vorzugsweise 160 bar und 180 bar, aufgebaut werden. Wenigstens zwei flüssige Komponenten werden in einer gemeinsamen Strömung zusammengeführt und anschließend in einem Mischblock vermengt, um die Komponentenmischung schließlich an einer Düse, beispielsweise einer Sprühpistole, zu zerstäuben. Eine solche Anlage wird dazu eingesetzt, großflächige Bauteile, wie Stahlträger, oder kleinflächige Bauteile, wie Kunststoffkomponenten beispielsweise der Automobiltechnik, zu beschichten. Die Beschichtung soll durch eine möglichst homogene Mischung der Komponenten gebildet sein.

Auf dem Gebiet der Nasslackiertechnik werden zwei voneinander getrennte Flüssigkomponenten an einer Zuführstelle vereint, indem eine Zuführkomponente, wie ein Härter, ein Verdünner oder eine Farbe, einer Stammkomponente, wie einer Lackkomponente A, zugegeben wird. Beide Komponenten werden zum Beispiel mit einer Kolbenpumpe angefördert. Für eine diskontinuierliche Zuführung der Zuführkomponente ist in deren Förderleitung ein Einlassventil zum Öffnen und Schließen der Zuführleitung angeordnet. Eine derartige Mischvorrichtung ist aus der DE 33 05 890 A1 bekannt, bei der auch die Stammkomponente diskontinuierlich an der Zuführstelle zur Bildung der Mischungshauptströmung zugeführt wird, die anschließend an den Mischblock weitergegeben wird. Nach der Zusammenführung der diskontinuierlichen Komponentenzuflüsse stellt die Mischungshauptströmung eine alternierende Folge von Komponenten-Paketen hoher, wenn nicht reiner Konzentration dar. Der Mischerblock und die Leitung zur Abgabedüse dienen dazu, die Paketfolge zu vermengen und die Komponentenkonzentration der Hauptströmung möglichst gleichmäßig zu verteilen. Eine Steuerung überwacht die diskontinuierliche Anförderung der einzelnen Komponenten und steuert die Einlassventile entsprechend an- oder ab. Bei der bekannten Vorrichtung können auf einfache Weise unterschiedliche Mischungsdosierverhältnisse eingestellt werden. Zur Überwachung ist jeweils für die Komponenten ein Durchflussmengenmesser vorgesehen. Bei der bekannten Mischvorrichtung zeigte sich allerdings ein Problem, dass eine ausreichend homogene Mischkonzentration selbst bei sehr effektiven Mischblöcken und Mischrohren nicht oder nur mit einem sehr hohen Aufwand für eine entsprechende Regelung und die Konstruktion erreicht werden kann. Insofern wird die bekannte Mischvorrichtung nur dort eingesetzt, wo das Konzentrationsverhältnis in einem relativ hohen Toleranzbereich vor allem bei großflächigen Beschichtungen zugelassen wird. Die bekannte Mischvorrichtung ist aber weniger zum Dosieren von schnellreaktiven Komponenten mit einer hohen erforderlichen Dosiergenauigkeit geeignet, weil keine ausreichend homogene Durchmischung erreicht werden kann.

Um eine höhere Dosiergenauigkeit zu erreichen, ist es denkbar eine kontinuierliche Zuführung der Zuführkomponente, also ohne eine vorläufige Paketbildung in der Hauptströmung, in Betracht zu ziehen. Eine kontinuierliche Förderung könnte über regelungsgemäß verstellbare Druckregler und einer Regelungstechnik realisiert sein. Eine solche kontinuierliche, elektronisch geregelte Druckregelung ist aus DE 43 32 125 A1 bekannt. Gemäß diesem bekannten Mischverfahren werden elektronisch betätigte Druckregler für sowohl die Stammkomponente als auch die Zuführkomponente verwendet. Es zeigte sich, dass solche kontinuierliche Zuführverfahren bei häufig schwankenden hydraulischen Verhältnissen der Anlage nicht geeignet sind. Insbesondere auf dem Gebiet der Nassbeschichtungstechnik mit Förderdrücken zwischen 50 und 530 bar ist stets mit einer nicht-linearen Schlauchausdehnung zu rechnen. Bei Einsatz von Kolbenpumpen führt der unvermeidbare Umkehrpunkt zu einer nicht-konstanten Fördermenge und Förderdruck. Auch ein häufiges Aktivieren und Deaktivieren von Sprühpistolen verhindert eine konstante Verbrauchsmenge. Durch die hydraulischen Verhältnisse hohen Drucks und die nicht vermeidbare Trägheit von mechanischen und pneumatischen Komponenten des Regelkreises wird ein Mischverfahren nach DE 43 32 125 A1 nur bei lang anhaltenden kontinuierlichen Komponentenflüssen verwendet. Aufgrund von sehr hohen Versorgungsdrücken für die Komponenten ist ein stabiles, schwingungsfreies Regeln mit kurzen Einschwingzeiten vor allem dann kaum realisierbar, wenn Störgrößen, wie das ständige Ein- und Ausschalten der Sprühpistolen, Verwenden von weiteren Sprühpistolen sowie der Pumprichtungswechsel von Kolbenpumpen, häufig auftreten. Eine Änderung der Mischungskonkonzentration, wie eine Nachjustierung beispielsweise aufgrund von Änderungen der Temperatur und der Viskosität der Zuführkomponente, kann bei dem bekannten Verfahren nur durch entsprechend aufwendige Voreinstellungen realisiert werden. DE 101 21 950 A1 offenbart eine Vorrichtung entsprechend dem Oberbegriff des Anspruchs 8 zur Erzeugung einer Mehrkomponentenmischung. Es ist Aufgabe der Erfindung, die Nachteile des Stands der Technik zu überwinden, um insbesondere ein Verfahren oder eine Vorrichtung zum Mischen wenigstens zweier flüssiger Komponenten ökonomisch günstig bereitzustellen, wobei eine Zuführkomponente diskontinuierlich einer Stammkomponente zugeführt wird und eine deutlich homogenere Dosierkonzentration erreicht und/oder eine hohe Variabilität bei der Einstellung des Mischverhältnisses ohne hohen konstruktiven und ergonomischen Aufwand ermöglicht sein sollen.

Diese Aufgabe wird durch die Merkmale der Ansprüche 1 und 8 gelöst. Danach ist ein Verfahren und eine Vorrichtung zum Mischen und/oder Dosieren wenigstens zweier flüssiger Komponenten insbesondere eines Zwei- oder Mehrkomponentennassbeschichtungssystems gemäß einem vorbestimmten Mischungsverhältnis vorgesehen. Die wenigstens zwei Komponenten können durch eine Stammkomponente, wie einen Stammlack, oder eine Stammkomponentenmischung und einer Zuführ- oder Dosierkomponente, wie einen Härter, einen Verdünner oder eine Farbe, sowie zusätzlichen Komponenten, gebildet sein. Es können auch die Stammkomponente der Härter und die Zuführkomponente der Stammlack sein. Die Komponenten werden in getrennten Reservoirs gelagert und von getrennten Druckerzeugern, wie Kolbenpumpen, Membranpumpen oder Drucktanks, unter einen hydraulischen Druck gestellt, um sie an eine Zuführstelle, wie einer Vereinigungsleitungsweiche, zusammenzuführen. Die Druckerzeuger können einen Druck von über 1 bar (Drucktank) oder auch über 100 bar (Kolbenpumpe) erzeugen, wobei es bevorzugt ist, dass die Stammkomponente einem geringeren Druck ausgesetzt ist, als die Zuführkomponente. Dabei sollte der Druckunterschied zwischen den Hydraulikdrücken der flüssigen Komponenten bei wenigstens über 0,1 oder über 5 bar sein, vorzugsweise zwischen 10 und 30, insbesondere 20 bar, liegen. Es ist bevorzugt, dass die Stammkomponente ohne Unterbrechung der Zuführstelle bereitgestellt wird, d.h. der Zufluss der Stammkomponente ist kontinuierlich, solange beispielsweise eine Abgabedüse, wie eine Sprühpistole, betätigt wird. Der Zufluss der Stammkomponente wird durch einen konstant oder fest eingestellten, insbesondere ungeregelten Hydraulikdruck bereitgestellt. Die vorzugsweise ebenfalls unter konstant oder fest eingestelltem, insbesondere ungeregeltem hydraulischen Druck stehende Zuführkomponente wird nicht kontinuierlich der Zuführstelle zugeführt, sondern mittels eines Ein-/Aus-Taktventils zumindest zu Beginn des Mischverfahrens diskontinuierlich unter Bildung von Dosen der Stammkomponente zugemengt. Eine konstante Einstellung des Hydraulikdrucks bedeutet, dass der Hydraulikdruck selbst keine Regelungsgröße für das erfindungsgemäße Mischverfahren darstellt. Der Hydraulikdruck wird von außen beispielsweise über einen insbesondere manuell betätigbaren pneumatischen Druckregler eingestellt, dessen Einstellwert (Luftdruck) für das erfindungsgemäße Mischverfahren vorab fest eingestellt wird. Der effektive dynamische Ist-Hydraulikdruck kann sich während des Mischverfahrens aufgrund vieler betriebsbedingter Besonderheiten verändern, beispielsweise wenn die den Hydraulikdruck aufbauende Kolbenpumpe einen Umkehrpunkt erreicht. Zudem sind unterschiedliche Hydraulikdrücke bei der Abwärts- und Aufwärtsbewegung der Kolbenpumpe generiert. Für das erfindungsgemäße Mischverfahren bedarf es vorzugsweise keiner regelungsbedingten Beeinflussung des Hydraulikdrucks. Allerdings ist es durchaus vorstellbar, dass auch der hydraulische Druck der Stamm- und/oder Zuführkomponente zur Optimierung des Mischverfahrens als zusätzliche Regelgröße aufgenommen wird. Die dosierte, diskontinuierliche Zuführung der Zuführkomponente wird aufgrund des höheren Hydraulikdrucks der Zuführkomponente erreicht, so dass die Zuführkomponente in die vorzugsweise undosierte oder ungetaktete (kontinuierlich bereitgestellte) Stammkomponente injiziert wird. Es zeigte sich, dass an der Zuführstelle das Injizieren der Zuführkomponente einen ersten Durchmischungseffekt erreicht, weil ein Teil der Zuführkomponente aufgrund des höheren hydraulischen Drucks Teile der Stammkomponente verdrängt und sogar "überholt". Somit ist durch das injizierende Zuführen der Zuführkomponente in eine kontinuierliche Stammkomponentenströmung eine Mischungshauptströmung erreicht, wodurch zumindest während des Zuführens der Zuführkomponente eine Paketlösung mit einer hohen Komponentenkonzentration vermieden ist. Lediglich zum Zeitpunkt der fehlenden Zuführung der Zuführkomponente während einer Zuführpause der diskontinuierlichen Zuführung ist die Mischungshauptströmung durch einen Strömungsabschnitt hoher Stammkomponentenkonzentration gebildet.

Um das gewünschte Mengenverhältnis zwischen der Stammkomponente und der Zuführkomponente und gegebenenfalls weiterer Komponenten zu überwachen, wird zumindest eine Ist-Zuführmenge der Zuführkomponente beispielsweise mittels eines Durchflussmengensensors erfasst. Es sei klar, dass auch eine entsprechende Sensorik für die Messung der Durchflussmenge der Stammkomponente und/oder der zusätzlichen Komponenten vorgesehen sein kann. Der Durchflussmengensensor kann beispielsweise durch eine Zahnradmesszelle, eine Spindeldurchflussmesszelle, eine Coriolis-Massendurchflussmesser, aber auch durch eine Messeinrichtung, die mittels indirekter Messung beispielweise mit Hubsensoren von Kolbenpumpen, funktionieren, gebildet sein. Die Ist-Zuführmenge der jeweiligen Komponente wird einer Regelung mit einer Regelungselektronik zugesandt. Erfindungsgemäß wird die Zuführmenge der Zuführkomponente gegenüber einer Soll-Zuführmenge für die Zuführkomponente derart geregelt, dass eine Taktung der diskontinuierlichen Zuführung und ein Durchtrittsquerschnitt für die Zuführkomponente beeinflusst werden. Auf diese Weise ist es möglich, ohne die Beeinflussung der hydraulischen Druckzustände der Komponenten den Mischungsgrad der Mischhauptströmung zu verbessern. Mit der Erfindung ist es möglich, die Zuführpausen der diskontinuierlichen Zuführung deutlich zu verkürzen, indem der Durchtrittsquerschnitt für die Zuführkomponente reduziert wird. Auf diese Weise werden die Strömungsabschnitte mit reiner Stammkomponentenkonzentration deutlich kleiner, wodurch ein deutlich homogeneres Mischungsverhältnis bei der Abgabe der Mischungshauptströmung erreicht wird. Es zeigt sich sogar, dass durch die ausschließliche Beeinflussung nur der Taktung und des Durchtrittsquerschnitts für die Zuführkomponente Betriebszustände erreicht werden, indem kaum noch eine Unterbrechung der Zuführung der Zuführkomponente notwendig ist, so dass keine Strömungsabschnitte in der Hauptmischungsströmung gebildet werden, die ausschließlich durch die Stammkomponente gebildet ist. Mit der erfindungsgemäßen Maßnahme der ausschließlichen Beeinflussung der Taktung der diskontinuierlichen Zuführung und des Durchtrittsquerschnitts der Zuführkomponente ist es möglich, dass an sich bewährte diskontinuierliche Mischungskonzept mit deren Vorteil der günstigen Bereitstellung, des einfachen konstruktiven Aufwands sowie der einfachen Wartung und Dauerbeständigkeit zu nutzen und von Mischungsverhältnissen zu profitieren, die einem kontinuierlichen Mischungskonzept entspricht.

Die Regelung für die Zuführung der Zuführkomponente kann eine Mengenverhältnisregelung sein, bei der sowohl die Ist-Durchflussmenge der Stammkomponente als auch die der Zuführkomponente erfasst und ins Verhältnis gesetzt werden. Der Betrag für den Mischverhältnissollwert kann beispielsweise von einer Bedienperson vorab insbesondere in der Regelungselektronik abgespeichert sein. Aus der Messung der Ist-Zuführmenge der Stammkomponente und aus den Mischverhältnissollwerten ergibt sich die Soll-Zuführmenge der Zuführkomponente. Während der Mischverhältnissollwert während des Regelungsverfahrens vorab eingestellt konstant bleibt, kann sich der Soll-Zuführmengenwert für die Zuführkomponente ändern und zwar in Abhängigkeit vom tatsächlich erfassten Ist-Durchflussmengenwert der Stammkomponente. Der einfache Grundaufbau des diskontinuierlichen Mischungskonzepts ermöglicht es, dass Mischungsverhältnis individuell einzustellen, ohne konstruktiv in den Aufbau der Vorrichtung einzugreifen. Es sei klar, dass der Mischverhältnis-Sollwert nicht nur ein Einzelwert sondern auch ein um ein Einzelwert definierter Sollwertbereich, beispielweise +/-1 %, sein kann.

Bei einer Weiterbildung der Erfindung besteht die Taktung der diskontinuierlichen Zuführung der Zuführkomponente aus einer zeitlichen Abfolge eines Zuführintervalls, währenddessen die Zuführkomponente der Stammkomponente zugemischt wird und insbesondere der veränderbare Durchtrittsquerschnitt unverändert bleibt, und einer an das Zuführintervall anschließenden Zuführpause, während der die Zumischung der Zuführkomponente unterbrochen wird und insbesondere der regelungsgemäß zu ändernde Durchtrittsquerschnitt für eine anschließenden Taktung eingestellt wird. Es ist nicht notwendig, den Durchtrittsquerschnitt während des Zuführintervalls zu verändern. Dies kann einfach bei geschlossenem Taktventil durchgeführt werden, was ein präzises Einstellen ermöglicht. Es ist allerdings durchaus vorstellbar, dass bei höherwertigen Drosselventilen beispielsweise mit einer elektronischen Ansteuerung anstatt einer pneumatischen Ansteuerung eine Veränderung des Durchschnittsquerschnitts während des Zuführintervalls von Vorteil sein kann insbesondere wenn aufgrund der erfindungsgemäßen Regelung ein lang andauerndes Zuführintervall aufgrund von konstanten Mischungsverhältnissen erreicht werden. Eine Veränderung des Durchtrittsquerschnitts kann während der Zuführpause und/oder während des Zuführintervalls vorgenommen werden.

Die zeitliche Abfolge der Taktung wird derart regelungsgemäß beeinflusst, dass zur Optimierung der diskontinuierlichen Zuführung insbesondere zeitanteilsmäßig die Dauer des Zuführintervalls auf Kosten eines insbesondere zeitanteilsmäßigen Reduzierung der Zuführpause erhöht wird, sollte bei der Überwachung der Ist-Zuführmenge festgestellt werden, dass die Ist-Zuführmenge die Soll-Zuführmenge überschritten hat. Um die insbesondere zeitanteilsmäßige Erhöhung der Dauer des Zuführintervalls zu kompensieren, wird der veränderbare Durchtrittquerschnitts in einer mischvorrichtungsspezifischen Abhängigkeit verringert. Mit der Verringerung des Durchtrittsquerschnitts, wobei vorteilhafterweise die Einstellung des Hydraulikdrucks für die Zuführkomponente unverändert bleibt, wird eine geringere Menge der Zuführkomponente in der anschließenden Taktung bereitgestellt, wodurch die Zuführmengenregelung feststellt, dass der Soll-Zuführmengenwert erst später erreicht wird, was zur der gewünschten Verlängerung des Zuführintervalls führt. Nachdem die Soll-Zuführmenge für die Zuführkomponente (nach dem verlängerten Zuführintervall) wieder erreicht wird, wird die Zuführung der Zuführkomponente unterbrochen und die Zuführpause beginnt. Die Länge der Zuführpause ist nicht nur prozentual kürzer als das verlängerte Zuführintervall, vielmehr wird aufgrund der reduzierten Zuführmenge für die Zuführkomponente ein Überschwingen der Soll-Zuführmenge deutlich abgeschwächt, wodurch auch absolut die Zuführpause verkürzt wird. Zusammenfassend wird nicht nur zeitanteilsmäßig sondern auch zeitlich absolut ein verlängertes Zuführintervall und ein verkürzte Zuführpause bereitgestellt, wodurch der Strömungsabschnitt reiner Stammkomponentenkonzentration verkleinert wird.

Sollte ein Mischungsbetrieb realisiert sein, bei dem etwaige Störgrößen, wie ein Stromrichtungswechsel einer Kolbenpumpe, Ein- und Ausschalten von Sprühpistolen, Hinzufügen von Sprühpistolen, weitgehend ausgeschlossen ist, kann nach insbesondere mehrmaligem Einstellen des Durchtrittsquerschnitts ein Injektionsmengenfluss für die Zuführkomponenten gefunden sein, der für ein gewünschtes Mengenverhältnis zwischen der Stammkomponente und der Zuführkomponente optimal ist. In diesem Fall kann es dazu kommen, dass sich eine kontinuierliche, ungetaktete Zuführung der Zuführkomponente einstellt. In diesem Betriebszustand können folgende Verfahrensfortsetzungen vorgenommen werden. Gemäß einer ersten Alternative kann nach einer Kontrollzeit, die beispielsweise vorab in der Regelungselektronik festgelegt ist und beispielsweise 1,5 s lang sein kann, der Durchtrittquerschnitt während des kontinuierlichen Zuführens in einem festgelegten Stellamplitudenbereich um den eingestellten Durchtrittsquerschnitt vergrößert bzw. verkleinert werden, um das Mengenmischverhältnis noch weiter zu optimieren, wodurch insbesondere das Mischverfahren ohne Taktung der Zuführung der Zuführkomponente quasi stationär abläuft. Es ist auch möglich, den Durchtrittsquerschnitt derart stark zu vergrößern, dass der Soll-Zuführungsmengenwert, insbesondere der Soll-Zuführmengenwert-Toleranzrahmen verlassen wird, so dass die Zuführung der Zuführkomponente wieder unterbrochen wird und damit die diskontinuierliche getaktete Zuführung der Zuführkomponente regelungsgemäß von neuem beginnen kann.

Im Falle der Ermittlung einer der gegenüber der Soll-Zuführmenge kleineren und im zeitlichen Verlauf sinkenden Ist-Zuführmenge wird der Durchtrittsquerschnitt vergrößert, um das Verfahren der diskontinuierlichen Zuführung der Zuführkomponente neu zu initiieren. Bei einer bevorzugten Ausführung der Erfindung kann die Zuführkomponenten-Regelung dahingehend erweitert sein, dass ein optimales Zuführintervall-Zuführpausen-Verhältnis dadurch festgelegt wird, dass, sollte beispielsweise der prozentuale Anteil des Zuführintervalls größer eines vorbestimmten Werts, wie 50, 60, oder 70%, sein, eine weitere Veränderung des Durchtrittsquerschnitts unterbleibt, um die Dauer des Zuführintervalls und der Zuführpause konstant zu halten. Dies kann insbesondere dann von Vorteil sein, wenn mit dem eingestellten Zuführintervall-Zuführpausen-Verhältnis ein ausreichend homogenes Mischungsergebnis erzielt wird.

Bei einer bevorzugten Weiterbildung der Erfindung beginnt eine Taktung mit Auslösung des Zuführintervalls, das mit Auslösung der Zuführpause dann endet, wenn die Ist-Zuführmenge die Soll-Zuführmenge erreicht oder überschreitet. Es sei klar, dass zur Realisierung der erfindungsgemäßen Zuführkomponenten-Regelung es nicht darauf ankommt, die zeitliche Dauer des Zuführintervalls und/oder der Zuführpause zu bestimmten, vielmehr geht eine Beeinflussung der Taktung und damit eine Verlängerung des Zuführintervalls (eine Verkürzung der Zuführpause) lediglich aufgrund der regelungsgemäßen Überwachung der Zuführmenge der Zuführkomponente einher. Bei einer bevorzugten Ausführung des Verfahrens kann es durchaus von Vorteil sein, auch die zeitlichen Start- und Endpunkte des Zuführintervalls und der Zuführpause zu bestimmten und in die Zuführkomponentenregelung einzubinden. Dies kann beispielsweise dadurch realisiert werden, dass bei einem bestimmten Zeitverhältnis zwischen dem Zuführintervall und der Zuführpause eine weitere regelungsgemäße Durchtrittsquerschnittsveränderung unterbunden wird.

Bei einer bevorzugten Ausführung der Erfindung wird zu Beginn des erfindungsgemäßen Verfahrens, insbesondere zur Initiierung der Zuführkomponentenregelung eine Übergröße für den Durchtrittsquerschnitt eingestellt. Es sei klar, dass die Übergröße bereits beim Ende des bereits vorhergehenden Mischverfahrens eingestellt worden sein kann. Mit der Übergröße ist zu erwarten, dass bereits nach einem kurzen Zuführintervall und einem deutlichen Überschwingen der Soll-Zuführmenge die Zuführpause initiiert wird. Im zeitlichen Verlauf wird also ein stark steigendes Verhältnis der Ist-Zuführmenge zur Soll-Zuführmenge erreicht. Vorzugsweise soll die Ist-Zuführmenge die voreingestellte Soll-Zuführmenge innerhalb von weniger als fünf Sekunden erreichen.

Bei einer bevorzugten Weiterbildung der Erfindung wird ein Ist-Soll-Zuführmengenverhältnis überwacht. Im Falle einer gegenüber der Soll-Zuführmenge kleineren Ist-Zuführmenge und/oder eines Abnehmens des Ist-/Soll-Zuführmengenverhältnisses wird der Durchtrittsquerschnitt vorzugsweise derart vergrößert, dass das Ist-Soll-Zuführmengenverhältnis während des anschließenden Zuführintervalls ansteigt.

Bei einer bevorzugten Ausführung der Erfindung wird der Durchtrittsquerschnitt während der Zuführpause schrittweise geändert. Vorzugsweise wird der Durchtrittsquerschnitt ausschließlich während der Zuführpause geändert. Alternativ kann auch während des Zuführintervalls eine Änderung des Durchtrittsquerschnitts realisiert werden. Vorzugsweise ist diese dann schrittweise nach weiteren Kontrollzeiten vorzunehmen, wenn ein ausgeglichenes Ist-/Soll-Zuführmengenverhältnis insbesondere während eines im Wesentlichen störgrößenfreien Verfahrensbetriebes ermittelt wird.

Bei einer bevorzugten Ausführung der Erfindung wird die regelungsgemäße Beeinflussung des Durchtrittsquerschnitts und der Taktung erst ausgeführt, wenn ein zeitlicher Anteil des Zuführintervalls bei einer Taktung kleiner 100% liegt. Vorzugsweise wird die regelungsgemäße Beeinflussung nicht mehr ausgeführt, wenn der zeitliche Anteil des Zuführintervalls einen vorbestimmten Wert, wie 50, 60, 80 bis 90%, überschreitet.

Des Weiteren betrifft die Erfindung eine Vorrichtung zum Dosieren und/oder Mischen wenigstens zweier flüssiger Komponenten, wie einen Zwei- oder Mehrkomponentenmischer eines Zwei- oder Mehrkomponentennassbeschichtungssystems, in einem vorbestimmten Mischungsverhältnis.

Die erfindungsgemäße Vorrichtung hat ein Leitungssystem zum getrennten Zuführen der wenigstens zwei Komponenten unter insbesondere konstant oder fest eingestelltem Hydraulikdruck, wobei das Leitungssystem eine Stammleitung sowie eine Stammkomponente oder ein Stammkomponentengemisch und eine in die Stammleitung mündende Zulaufleitung für eine Zulaufkomponente umfasst. Das Leitungssystem kann durch Schläuche, Rohre und Funktionsblöcke gebildet sein. Die Zuführstelle, an der die Zuführleitung in die Stammleitung mündet, kann auch als Leitungsvereinigung bezeichnet werden. Während die Stammkomponente ungehindert die Zuführstelle passieren kann, wird die Zuführung der Zuführkomponente getaktet. Hierzu hat die erfindungsgemäße Vorrichtung ein Ein/Aus-Taktventil zum Schließen oder Öffnen der Zulaufleitung und damit zum diskontinuierlichen Zuführen der Zuführkomponente. Das Taktventil ist vorzugsweise ausschließlich dazu geeignet, eine Durchströmpassage in der der Zulaufleitung zu schließen oder zu öffnen. Nur im Rahmen einer bevorzugten Ausführung kann auch der Durchlaufpassagenquerschnitt des Taktventils einstellbar sein. Stromaufwärts der Zuführstelle sowohl in der Zulaufleitung als auch in der Stammleitung kann jeweils ein Rückschlagventil vorgesehen sein, um ein Einströmen des Komponentengemisches in die jeweilige Leitung, die eine reine Komponente führt, zu verhindern.

Das Taktventil kann durch einen pneumatischen Stellantrieb gestellt sein, der vorzugsweise mit einer Regelungselektronik zur Regelung der Zuführkomponentenmenge der erfindungsgemäßen Vorrichtung verbunden sein kann.

Des weiteren hat die erfindungsgemäße Vorrichtung eine Drosseleinrichtung zum Verändern des Durchtrittsquerschnitts der Zulaufleitung. Die Drosseleinrichtung soll dazu geeignet sein, schrittweise und/oder kontinuierlich den Durchtrittsquerschnitt im Verlauf der Zulaufleitung zu verändern.

Des weiteren hat die erfindungsgemäße Vorrichtung einen Durchflussmengenmesser zum Erfassen einer Ist-Durchflussmenge der Zuführkomponente. Auch weitere Durchflussmengenmesser für die Stammkomponente oder weitere Komponenten können vorgesehen sein. Der Durchflussmengenmesser ist mit einer Regelung der Durchflussmenge der Zuführkomponente verbunden. Die Regelung ist vorzugsweise durch eine Regelungselektronik gebildet, in der die Regelungsroutine hinterlegt sein kann und der Wert für die Soll-Zuführmenge aus der gemessenen Ist-Durchflussmenge der Stammkomponente mit dem eingestellten Mischungssollwertverhältnis berechnet wird.

Erfindungsgemäß hat die Vorrichtung einen die Drosseleinrichtung betätigenden Stellantrieb. Die Regelung steuert insbesondere ausschließlich sowohl den Stellantrieb als auch das Ein-/Aus-Taktventil derart an, dass zur regelungsgemäßen Änderung der Durchflussmenge in deren zeitlichen Verlauf der Durchtrittsquerschnitt beeinflusst wird, wodurch zur Kompensation gleichzeitig die Taktung des Taktventils beeinflusst wird. Dies wird dadurch erreicht, dass beispielsweise durch die Verkleinerung des Durchtrittsquerschnitts zwar ein reduzierter Volumen- bzw. Massenstrom der Zuführkomponente an der Zuführstelle erreicht wird, allerdings zum Erreichen des Mischungsverhältnisses bzw. dessen Überschreitung die Öffnungsphase des Taktventils verlängert wird. Auf diese Weise wird die Taktung beeinflusst, nämlich das Zuführintervall verlängert.

Bei einer bevorzugten Ausführung der erfindungsgemäßen Vorrichtung ist die Drosseleinrichtung in Zuführrichtung strömungsauf- oder -abwärts des Ein-/Aus-Taktventils angeordnet. Alternativ kann die Drosseleinrichtung und das Ein-/Aus-Taktventil in einem gemeinsamen Bauteil vereint sein.

Bei einer bevorzugten Ausführung der Erfindung wird das Ein/Aus-Taktventil pneumatisch angesteuert. Zwar ist mir einer pneumatischen Ansteuerung eine größere Trägheit bei der Regelung des Mischungsverhältnisses zu erwarten, allerdings ist das erfindungsgemäße Verfahren optimal dazu ausgelegt, diese Trägheit zu kompensieren.

Es sei klar, dass die erfindungsgemäße Vorrichtung entsprechend der Funktionsweise und des Verfahrensablaufs des erfindungsgemäßen Verfahrens ausgelegt sein kann. Gleiches gilt auch für das erfindungsgemäße Verfahren, das gemäß der Funktionsweise der erfindungsgemäßen Vorrichtung verfahren kann.

Weitere Eigenschaften, Vorteile und Merkmale der Erfindung werden durch folgende Beschreibung einer bevorzugten Ausführung anhand der beiliegenden Zeichnungen ersichtlich, in denen zeigen:
- Figur 1: eine schematische Prinzipskizze einer erfindungsgemäßen Mischvorrichtung in einer ersten Ausführung;
- Figur 2: eine schematische Prinzipskizze der erfindungsgemäßen Mischvorrichtung in einer zweiten Ausführung;
- Figur 3: eine schematische Prinzipskizze der erfindungsgemäßen Mischvorrichtung in einer dritten Ausführung;
- Figur 4a: ein Zeitdurchflussmengen-Diagramm betreffend einen Betriebsausgangszustand, der das erfindungsgemäße Verfahren verwendenden erfindungsgemäßen Mischvorrichtung;
- Figur 4b: ein Zeit-Taktungs-Diagramm in dem Betriebsausgangszustand;
- Figur 4c: ein Diagramm betreffend den zeitlichen Verlauf des Verhältnisses der Ist-Zuführmenge zur Soll-Zuführmenge im Betriebsausgangszustand;
- Figur 4d: ein Diagramm des zeitlichen Verlaufs des Durchtrittsquerschnitts an der Drosseleinrichtung der erfindungsgemäßen Mischvorrichtung;
- Figur 5a: ein Durchflussmengen-Zeitdiagramm bei einem erfindungsgemäß geregelten Betriebszustand der Mischvorrichtung;
- Figur 5b: ein Taktungs-Zeit-Diagramm in dem erfindungsgemäß geregelten Betriebszustand der Mischvorrichtung;
- Figur 5c: ein Diagramm betreffend den zeitlichen Verlauf des Verhältnisses der Ist-Zuführmenge zur Soll-Zuführmenge im Betriebsausgangszustand in einem geregelten Betriebszustand der erfindungsgemäßen Mischvorrichtung;
- Figur 5d: ein Diagramm des zeitlichen Verlaufs des Durchtrittsquerschnitts an der Drosseleinrichtung der erfindungsgemäßen Mischvorrichtung in einem geregelten Betriebszustand der erfindungsgemäßen Mischvorrichtung;
- Figur 6a: ein Durchflussmengen-Zeit-Diagramm in einem besonderen Betriebszustand der erfindungsgemäßen Mischvorrichtung;
- Figur 6b: ein Zeit-Taktungs-Diagramm in dem Betriebsausgangszustand in einem besonderen Betriebszustand der erfindungsgemäßen Mischvorrichtung;
- Figur 6c: ein Diagramm betreffend den zeitlichen Verlauf des Verhältnisses der Ist-Zuführmenge zur Soll-Zuführmenge im Betriebsausgangszustand in einem besonderen Betriebszustand der erfindungsgemäßen Mischvorrichtung; und
- Figur 6d: ein Diagramm des zeitlichen Verlaufs des Durchtrittsquerschnitts an der Drosseleinrichtung der erfindungsgemäßen Mischvorrichtung in einem besonderen Betriebszustand der erfindungsgemäßen Mischvorrichtung.

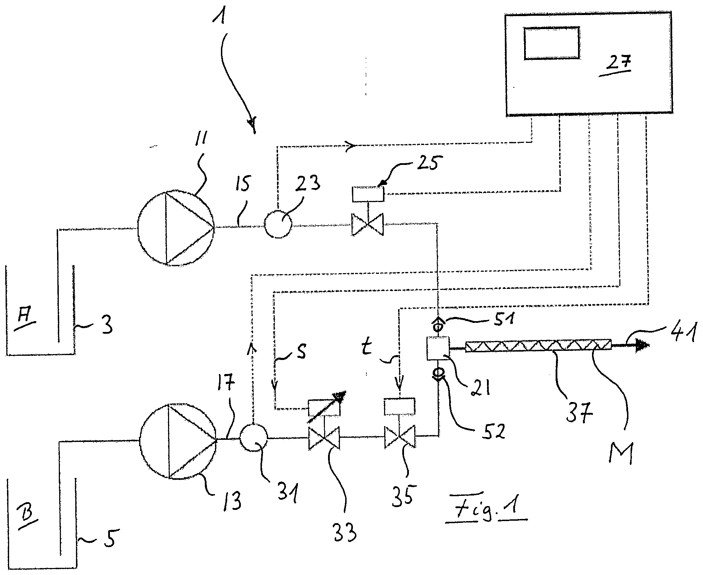

In den Figuren 1 bis 3 sind drei verschiedene, im Aufbau ähnliche bevorzugte Ausführungen der erfindungsgemäßen Mischvorrichtung im Allgemeinen mit der Bezugsziffer 1 versehen. Zur besseren Lesbarkeit der Figurenbeschreibung werden für die drei unterschiedlichen Ausführungen dieselben Bezugszeichen betreffend die gleichen oder ähnlichen Bauteile verwendet.

Die Mischvorrichtung 1 ist in dem dargestellten Fall für ein Zweikomponenten-Mischsystem eingesetzt, bei der eine Stammkomponente A und eine Zuführkomponente B verarbeitet werden. Die Stammkomponente A kann ein Stammlack sein, während die Zuführkomponente B ein Härter ist.

Sowohl für die Stammkomponente A als auch für die Zuführkomponente B ist ein eigenes Aufbewahrungsreservoir 3, 5 gelagert. Sowohl eine Kolbenpumpe 11 für die Stammkomponente A als auch eine Kolbenpumpe 13 für die Zuführkomponente B ziehen die jeweiligen Komponenten A, B aus dem Reservoir 3, 5 ab und erzeugen einen hydraulischen Druck in den Komponenten A, B, wobei ein Druckunterschied zwischen den Hydraulikdrücken von etwa 20 bar generiert sein soll. Beispielsweise kann die Stammkomponente einen Hydraulikdruck von etwa 160 bar aufweisen, während die Zuführkomponente einen Hydraulikdruck von etwa 180 bar aufweist. Die Druckerzeugung, die in den gezeigten bevorzugten Ausführungen durch eine Kolbenpumpe 11, 13 realisiert ist, ist bevorzugter Weise dazu ausgelegt, während des gesamten Betriebs der Mischvorrichtung 1 konstante hydraulische Druckverhältnisse sowohl für die Komponente A als auch für die Komponente B bereitzustellen. Eine regelungsgemäße Beeinflussung des Hydraulikdrucks während des erfindungsgemäßen Mischverfahrens der Mischvorrichtung 1 ist nicht notwendig, sogar ausgeschlossen. Durchaus kann es sein, den hydraulischen Druck beispielsweise je nach Komponententyp A, B, im Hinblick auf physikalische Betriebsverhältnisse, wie Temperatur, Druck, etc, oder dergleichen einstellbar zu machen, allerdings bleibt der Hydraulikdruck als Regelgröße für die noch im folgenden zu erläuternden Zuführkomponentenmengenregelung eine Konstante.

Von den jeweiligen Kolbenpumpen 11, 13 läuft jeweils für die Stammkomponente A und für die Zuführkomponente B eine Zuführleitung 15, 17, in der sich die unter konstant eingestellten Hydraulikdruck gesetzte Komponente A, B befindet. Beide Zuführleitungen 15, 17 münden in eine Leitungsvereinigung 21, in der die Zuführkomponente B diskontinuierlich der Stammkomponente A beigemengt wird.

In der Leitung 15 für die Stammkomponente A ist eine Messzelle 23 zum Erfassen der Durchflussmenge für die Stammkomponente A sowie ein Ventil 25 angeordnet, das pneumatisch gestellt ist. Die Messzelle 23 für die Stammkomponente A ist mit einer Steuerungs- und Regelungseinrichtung 27 zum Signalkommunikation verbunden. Die Steuerungs- und Regelungseinheit 27 empfängt Durchflussmengensignale von der Messzelle 23, verarbeitet unter Umständen diese gemäß dem Mischungsverfahren und gibt unter Umständen Steuersignale an das Ventil 25 ab, um eine regelungsgemäß kontinuierliche Strömung der Stammkomponente A in der Leitung 15 hin zur Leitungsvereinigung 21 bedarfsgemäß zu unterbrechen. Die Kontinuität der Strömung der Stammkomponente A ist derart zu verstehen, dass für das erfindungsgemäße Mischverfahren das Ventil 25 nicht betätigt wird, um das Mischmengenverhältnis zwischen der Komponente A und der Komponente B einzustellen. Das Ventil 25 stellt keine Drosselung der kontinuierlichen Strömung dar, d.h., wenn die die Mischvorrichtung verlassende Mischhauptströmung an einer Beschichtungspistole freigegeben wird, so strömt ungehindert die Stammkomponente A unter dem Einfluss deren hydraulischen Drucks von 160 bar hin zur Leitungsvereinigung 21.

Stromaufwärts der Leitungsvereinigung 21 in der jeweiligen Zuführleitung 15, 17 ist jeweils ein Rückschlagventil 51, 52, die verhindern soll, dass jeweils die andere Komponente in die Zulaufleitung 15, 17 gelangen kann.

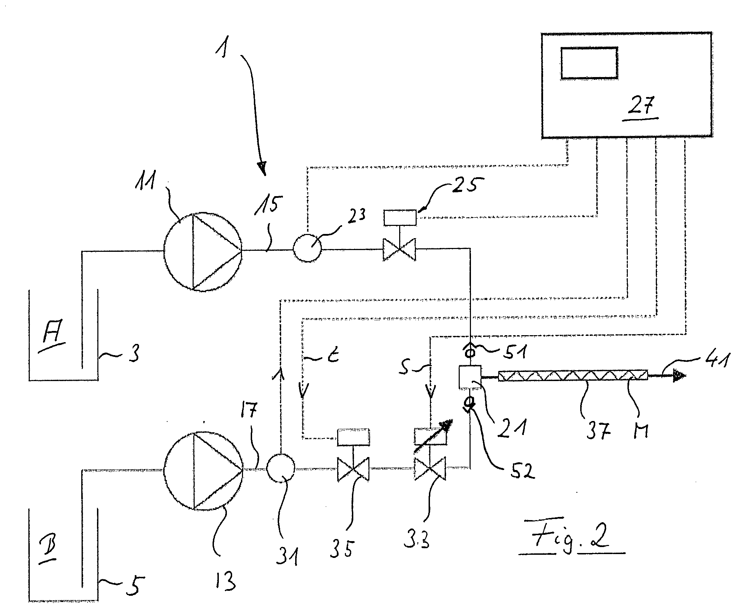

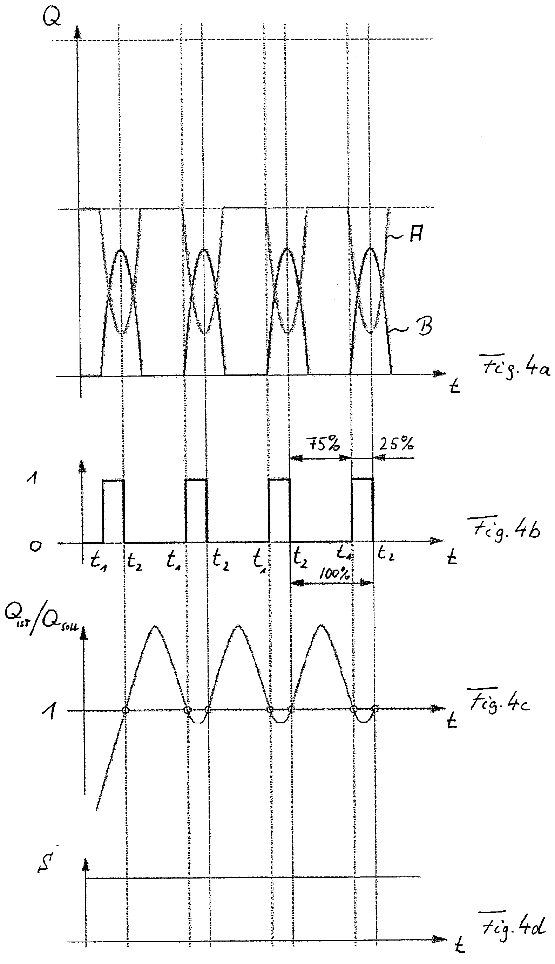

In der Zuführleitung 17 für die Zuführkomponente B ist ein Durchflussmengenzähler 31 angeordnet, der ein Ist-Durchflussmengensignal an die Steuerungs- und Regelungseinrichtung 27 überträgt. Außerdem sind in der Zuführleitung 17 ein Drosselventil 33 und ein Taktventil 35 angeordnet, wobei beide Ventile 33, 35 Steuerungssignale s, t von der Steuerungs- und Regelungseinrichtung 27 empfangen. Das Drosselventil 33 hat einen Stellantrieb, durch den der Durchtrittsquerschnitt (S, vgl. Fig. 4d bis 6d) der Zuführleitung 17 regelungsgemäß zu vergrößert oder zu verkleinert werden kann. Das Taktventil 35 wird pneumatisch betätigt und dient gemäß den Ausführung nach Figur 1 und 2 (lediglich) dazu, die Zuführleitung 17 vollständig freizugeben oder vollständig zu verschließen, um die diskontinuierliche Zuführung der Zuführkomponente B an der Leitungsvereinigung 21 zu realisieren.

Strömungsabwärts der Leitungsvereinigung 21 ist ein Mischer, wie ein Statikmischer 37, angeordnet, der eine abschließende Durchmengung der Komponenten A, B vollzieht, bevor die Mischhauptströmung M die Statikmischer 37 verlässt und an einer Abgabedüse, wie eine Spritzpistole, (nicht dargestellt) zur Beschichtung zerstäubt abgegeben wird, was durch den Pfeil 41 dargestellt sein soll.

Bei der Betätigung der Abgabedüse, wie der Spritzpistole, strömt, wie oben dargestellt, die Stammkomponente A kontinuierlich an der Leitungsvereinigung vorbei in den Statikmischer 37. Die Zuführkomponente wird diskontinuierlich aufgrund des Schließ- und Öffnungsvorgangs des Taktventils 35 diskontinuierlich der Stammkomponente A zugeführt. Bei Öffnen des Taktventils 35 wird aufgrund des hydraulischen Druckunterschieds zwischen den Komponenten A und B die Zuführkomponente B in die kontinuierliche Strömung der Stammkomponente A injiziert, wodurch die Stammkomponente B einen Teilbereich der Stammkomponentenströmung überholt und verdrängt, wodurch während der Zuführung der Zuführkomponente B ein erster Mischvorgang realisiert ist.

Beim Schließen des Taktventils 35 entsteht in der Mischhauptströmung M, bevor in die Statikmischer 37 gelangt ein Strömungsabschnitt, der ausschließlich aus der Stammkomponente A besteht. Diese Inhomogenität der Mischhauptströmung wird mittels des Statikmischers 37 und den darauf anschließenden Leitungsverlauf teilweise kompensiert.

Der Durchflussmengenzähler 31 für die Zuführkomponente B erfasst ständig die Ist-Zuführmenge, die das Reservoir 5 der Zuführkomponente B verlässt. Aufgrund der konstanten Strömung der Stammkomponente A oder aufgrund der Berücksichtigung des Messergebnisses der Messzelle 23 für die Stammkomponente A kann ein Mischmengenverhältnis zwischen den Komponenten A und B bestimmt werden.

Zu Beginn des erfindungsgemäßen Mischverfahrens ist der durch das von dem pneumatischen Stellantrieb zu betätigenden Drosselventil 35 definierte Durchtrittsquerschnitt derart eingestellt, dass in kurzer Zeit einer in der Steuerungs- und Regelungseinheit hinterlegte Soll-Zuführmengenwert für die Zuführkomponente B erreicht ist. Bei Überschreitung dieses Soll-Zuführmengenwerts veranlasst die Steuerungs- und Regelungseinrichtung 27 regelungsgemäß das Schließen des Taktventils 35, wobei das tatsächliche Mischmengenverhältnis zwischen den Komponenten A und B nicht abrupt absinkt, denn aufgrund Trägheitseffekte nur allmählich, bis die sich in den Leitungen befindlichen Komponenten verbraucht sind. Fällt die Ist-Zuführmenge entsprechend unter den Soll-Zuführmengenwert, so öffnet die Steuerungs- und Regelungseinrichtung 27 das Taktventil 35 wieder, um die Zuführkomponente B bei stets konstanten Druckverhältnissen in die Stammkomponente A zu injizieren.

Um nun gemäß dem erfindungsgemäßen Mischverfahren die Dauer der Öffnung des Taktventils 35 zu erhöhen, wird, während das Taktventil geschlossen ist, der Durchtrittsquerschnitt des Drosselventils 33 bei Empfang eines entsprechenden Steuersignals s verringert, wodurch der Volumen- bzw. der Massenstrom der Zuführkomponente B bei konstantem hydraulischen Druck verringert ist. Folglich wird die Soll-Zuführmenge erst nach einer längeren Öffnungsphase erreicht, als bei der vorangegangen Taktung des Taktventils 35 der Fall war. Wird nach der längeren Öffnungsphase des Taktventils 35 der Soll-Durchflussmengenwert erreicht, wird das Taktventil 35 wieder geschlossen, wobei auch die Schließphase bis zur nächsten Öffnung aufgrund des geringeren Volumenstroms, folglich wegen der Reduzierung des Durchtrittsquerschnitts, verkürzt ist. Auf diese Weise wird erreicht, dass bei einer diskontinuierlichen Zuführung der Komponente B das Zuführintervall des Taktventils 35 deutlich verlängert wird, während die Zuführpause des Taktventils verringert ist. Somit werden Strömungsabschnitte mit reiner Stammkomponentenkonzentration deutlich verkleinert.

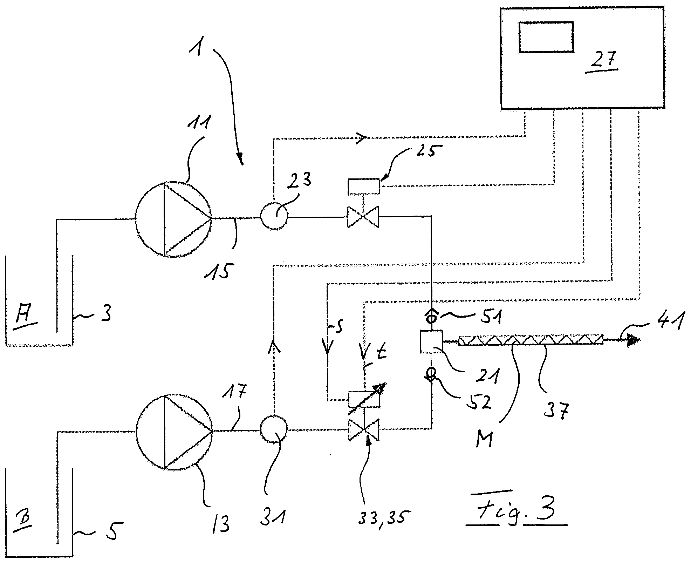

Die Ausführungen gemäß den Figuren 1, 2 und 3 unterscheiden sich lediglich in der Positionierung und/oder Realisierung des Drosselventils 33 und des Taktventils 35. Bei der Ausführung der Mischvorrichtung gemäß Figur 2 ist das Taktventil 35 stromaufwärts der Drosseleinrichtung 33 angeordnet, während bei der Mischvorrichtung gemäß Figur 3 die Drosselventilfunktion als auch die Taktventilfunktion in einem gemeinsamen Ventilbauteil realisiert ist, das sowohl den Durchtrittsquerschnitt veränderlich lässt als auch eine reine Öffnungs- und Schließbewegung realisiert.

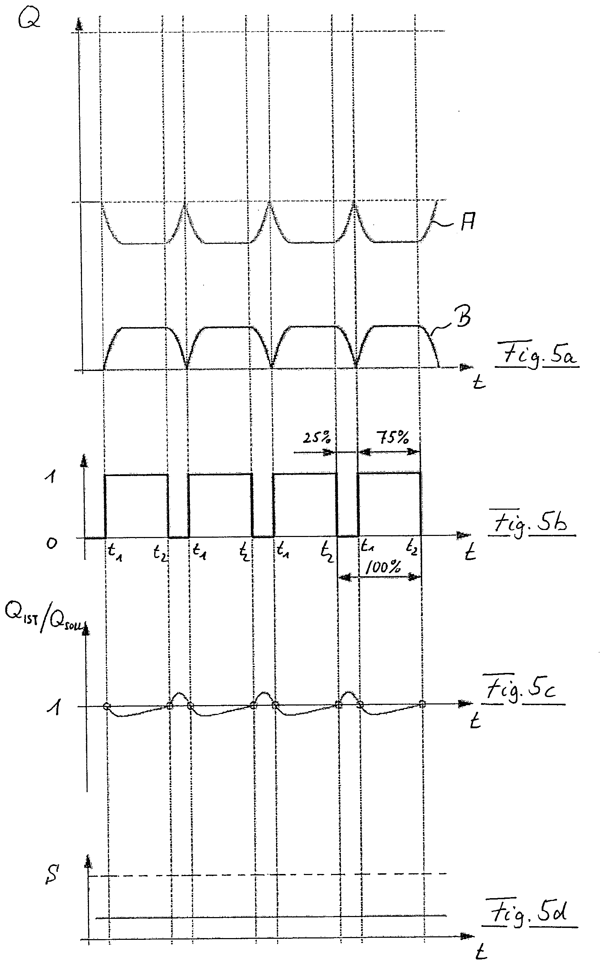

Das erfindungsgemäße Mischungsverfahren sowie bestimmte Verfahrenszustände können anhand der Diagramme im Hinblick auf die Figuren 4a bis 4d und 5a bis 5d erläutert werden.

In den Figuren 4a bis 4d und 5a bis 5d sind jeweils vier Diagramme dargestellt, bei denen die Durchflussmenge, die Taktung, das Verhältnis der Ist-Durchflussmenge zur Soll-Durchflussmenge sowie die Durchtrittquerschnittsstellung des Drosselventils 33 im zeitlichen Verlauf veranschaulicht sind.

In Figur 4a ist die Durchflussmengensituation der Stammkomponente A und der Zuführkomponente B zu Beginn des erfindungsgemäßen Mischverfahrens während vier Takte dargestellt. Zum Zeitpunkt t1 wird das Taktventil 35 geöffnet, wobei die Schließung zum Zeitpunkt t2 realisiert ist. Die geschlossene Zuführpause dauert bis zur nächsten Öffnung bei t1. Eine Taktung des Taktventils ist durch t1-t1 definiert. Die zeitliche Dauer von t1-t2 stellt das Zuführintervall dar, während die Zuführpause durch das Intervall t2-t1 definiert ist.

Wie in Figur 4a ersichtlich ist, herrscht vor der Betätigung des Taktventils t1 kein Durchfluss für die Zuführkomponente B, aber eine maximale Durchflussmenge für die Stammkomponente A. Nach Öffnen des Taktventils nimmt der Durchfluss für die Zuführkomponente B schlagartig an und zwar auf Kosten des Durchflusses für die Stammkomponente A.

Figur 4c betrachtend, nimmt das Verhältnis von Ist-Zuführmenge zur Soll-Zuführmenge mit der Öffnung des Taktventils allmählich zu.

Sensiert der Durchflussmengenmesser 31 für die Regelung, dass die Ist-Durchflussmenge die Soll-Durchflussmenge überschreitet, wird das Taktventil regelungsgemäß geschaltet und geschlossen (t2), was Figur 4b zeigt. In diesem Augenblick nimmt der Durchfluss für die Zuführkomponente B schlagartig zugunsten der Zunahme des Durchflusses für die Stammkomponente A ab. Diese Taktung wird unverändert vier Mal wiederholt, ohne den Durchtrittsquerschnitt des Drosselventils 33 zu verändern, was Figur 4d andeutet.

Bei diesem Taktrhythmus ist ersichtlich, dass das Taktventil 35 während eines 75%igen Anteils der Taktung geschlossen ist und lediglich während eines 25%igen Anteils der Taktung geöffnet ist, was Figur 4b andeutet.

Ziel des erfindungsgemäßen Mischungsverfahrens ist nun, das Zuführintervall (t1-t2) auf Kosten der Zuführpause (t2-t1) zu verlängern. Dies wird erfindungsgemäß dadurch erreicht, dass mittels des Stellantriebs der Durchtrittquerschnitt des Drosselventils reduziert wird (Figur 5d). Auf diese Weise ist die maximale Durchtrittsströmung der Zuführkomponente B reduziert, was in Figur 5a ersichtlich ist.

Unterschreitet nun der Ist-Durchflussmengenwert den Soll-Durchflussmengenwert, so schaltet die Steuerungs- und Regelungseinrichtung 27 das Taktventil in den Öffnungszustand (t1), was in Figur 5b ersichtlich ist. Die Abnahme der Durchflussmenge für die Stammkomponente A fällt deutlich geringer aus, weil die maximale Durchflussmenge für die Zuführkomponente B verringert ist. Gleichzeitig wird die Soll-Durchflussmenge zu einem späteren Zeitpunkt erreicht, was durch die erhöhte zeitliche Dauer des Zuführintervalls (t1-t2) ersichtlich ist. Nach Überschreitung des Soll-Durchflussmengenwertes schaltet die Steuerungs- und Regelungseinrichtung 27 das Taktventil in den geschlossenen Zustand, wodurch die Zuführpause (t2-t1) initiiert wird. Aufgrund der geringeren Durchflussmenge für die Zuführkomponente B ist das Überschwingen des Verhältnisses zwischen dem Ist- und Solldurchflussmengenwert (Fig4c und 5c) deutlich schwächer, weswegen sich die Zuführpause (t2-t1) verringert. Bei Unterschreitung des Soll-Durchflussmengenwerts wird das Taktventil wieder geöffnet. Mit der Reduzierung des Querschnitts geht eine Beeinflussung der Taktung dahingehend einher, dass das Zuführintervall auf 75% der gesamten Taktung verlängert wird, während die Zuführpause auf 25% der Taktung reduziert wird.

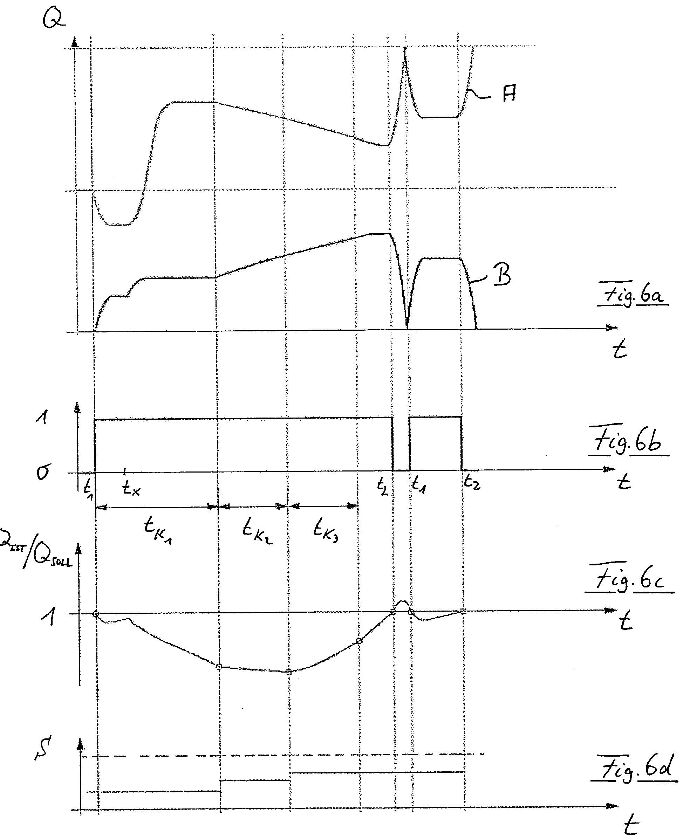

In den Figuren 6a bis 6d ist ein Sonderfall einer bestimmten Betriebssituation dahingehend dargestellt, dass die Mischungshauptströmung eine zweite Abgabedüse bedienen soll, wodurch der Bedarf an Stammkomponente und Zuführkomponente deutlich ansteigt. Wie in Figur 6b ersichtlich ist, ist das Taktventil 35 in die Öffnungsstellung getaktet, während der die Zuführkomponente B der Stammkomponente A zugemengt wird. Unmittelbar nach t1 steigt die Zuführmenge für die Zuführkomponente B entsprechend auf Kosten der Zuführmenge der Stammkomponente A an. Zum Zeitpunkt tx wird ein zweiter Verbraucher, wie eine zweite Sprühpistole betätigt, wodurch abrupt die Stammkomponentenmenge sowie die Zuführkomponentenmenge ansteigt, was in Figur 6a ersichtlicht ist. Allerdings macht Figur 6c deutlich, dass das Verhältnis von Ist-Durchflussmengenwert zu Soll-Durchflussmengenwert nach dem Zeitpunkt tx deutlich absinkt, weil die Zuführmenge B, die das Drosselventil 33 zulässt, nicht mehr ausreicht, um den Gesamtbedarf an der Zuführkomponente B zu decken. Insofern bleibt das Taktventil 35 stets geöffnet, wobei allerdings das Mischmengenverhältnis nicht erreicht wird. Insofern sieht das erweiterte erfindungsgemäße Mischverfahren vor, nach einer Kontrollzeit tk1 von beispielsweise 1,5 sec. eine Durchtrittsquerschnittsveränderung, nämlich - erhöhung, für die Drosseleinrichtung selbst im geöffneten Zustand des Taktventils zuzulassen, welche schrittweise Erhöhung in Figur 6d nach der Kontrollzeit tk erreicht wird. Bei Überprüfung der Entwicklung des Verhältnisses von Ist- zu Soll-Zuführmengenwert gemäß Figur 6c ist für die Steuerungs- und Regelungseinrichtung 27 ermittelbar, dass die Strömung für die Zuführkomponente B immer noch nicht ausreicht, weswegen eine weitere Vergrößerung des Durchtrittsquerschnitts der Drosseleinrichtung nach tk2 realisiert ist. Erst bei Überschreitung des Soll-Durchflussmengenwerts wird das Taktventil wieder betätigt und geschlossen, um das erfindungsgemäße Mischverfahren entsprechend zu initiieren.

Auf diese Weise ist gewährleistet, dass bei einer zu geringen Zuströmung von Zuführkomponente B ein zu geringes Mischungsverhältnis ausgeregelt wird.

Die erfindungsgemäße Anlage sowie das erfindungsgemäße Verfahren kann derart ausgelegt sein, dass, nachdem sich ein Mischungsverhältnis eingependelt hat und kaum noch Störgrößen auftreten, auf den Einsatz eines Taktventils verzichtet werden kann. Die Regelung erfolgt dann ausschließlich mit Hilfe des Drosselventils 33. Es ist auch vorstellbar, dass mit Hilfe einer zusätzlichen Hydraulikdruckregelung die erfindungsgemäße Regelung erweitert wird. Dabei kann sowohl der Hydraulikdruck der Zuführkomponente als auch der Stammkomponenteregelungsgemäß eingestellt werden. Außerdem sei es möglich, auch in der Stammleitung ein zusätzliches Taktventil vorzusehen, um die Stammkomponente dosiert zuzuführen.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Mischvorrichtung
- 3,5: Aufbewahrungsreservoir
- 11, 13: Kolbenpumpe
- 15, 17: Zuführleitung
- 21: Leitungsvereinigung
- 23, 31: Messzelle
- 25: Ventil
- 27: Steuerungs- und Regelungseinrichtung
- 33: Drosselventil
- 35: Taktventil
- 37: Statikmischer
- 41: Pfeil
- 51,52: Rückschlagventil
- A: Stammkomponente
- B: Zuführkomponente
- M: Mischhauptströmung
- s, t: Steuersignal

## Patentansprüche

1. Verfahren zum Mischen wenigstens zweier flüssiger Komponenten (A; B) insbesondere eines Zwei- oder Mehrkomponentennassbeschichtungssystems, wobei:
- eine unter insbesondere konstant eingestellten Hydraulikdruck stehende Zuführkomponente (B) einer unter insbesondere konstant eingestellten Hydraulikdruck stehenden Stammkomponente (A) diskontinuierlich durch ein veränderbaren Durchtrittsquerschnitt hindurch zugeführt wird;
- eine Ist-Zuführmenge der Zuführkomponente (B) erfasst wird, und
- die Zuführmenge der Zuführkomponente (B) gegenüber einer Soll-Zuführmenge für die Zuführkomponente (B) derart geregelt wird, dass eine Taktung der diskontinuierlichen Zuführung und der Durchtrittsquerschnitt für die Zuführkomponente (B) beeinflusst werden.

2. Verfahren nach Anspruch 1, wobei die Taktung aus einer zeitlichen Abfolge eines Zuführintervalls und einer daran anschließenden Zuführpause besteht und derart regelungsgemäß beeinflusst wird, dass
- i) im Falle einer Überschreitung der Soll-Zuführmenge die Dauer des Zuführintervalls auf Kosten einer Reduzierung der Zuführpause insbesondere für eine anschließende Taktung erhöht wird sowie der Durchtrittsquerschnitt verringert wird; und/oder
- ii) im Falle des Verbleibens der Ist-Zuführmenge innerhalb eines vorbestimmten Soll-Zuführmengen-Toleranzbandes nach Ablauf einer Kontrollzeit oder der Ermittlung eines gegenüber der Soll-Zuführmenge kleineren und im zeitlichen Verlauf sinkenden Ist-Zuführmenge der Durchtrittsquerschnitt vergrößert wird, so dass die regelungsgemäße Beeinflussung gemäß Schritt i) eingeleitet werden kann.

3. Verfahren nach Anspruch 1 oder 2, wobei die Taktung mit Auslösen des Zuführintervalls beginnt, das mit Auslösen der Zuführpause dann endet, wenn die Ist-Zuführmenge die Soll-Zuführmenge erreicht oder überschreitet.

4. Verfahren nach einem der vorstehenden Ansprüche, wobei zu dessen Beginn, insbesondere zur Initiierung der Regelung, eine Übergröße für den Durchtrittsquerschnitt eingestellt ist oder wird, so dass ein im zeitlichen Verlauf steigendes Verhältnis der Ist-Zuführmenge zur Soll-Zuführmenge erreicht wird, insbesondere die Zuführmenge von weniger als 5 s. die Soll-Zuführmenge erreicht oder überschreitet.

5. Verfahren nach einem der vorstehenden Ansprüche, wobei ein Ist-/Soll-Zuführmengenverhältnis überwacht wird und im Falle einer gegenüber der Soll-Zuführmenge kleineren Ist-Zuführmenge und/oder eines Abnehmens des Ist-/Soll-Zuführmengenverhältnis der Durchtrittsquerschnitt vorzugsweise derart vergrößert wird, dass das Ist-/Soll-Zuführmengenverhältnis während des anschließenden Zuführintervalls ansteigt.

6. Verfahren nach einem der vorstehenden Ansprüche, wobei der Durchtrittsquerschnitt während der Zuführpause schrittweise geändert wird oder wobei der Durchtrittsquerschnitt während des Zuführintervalls nach weiteren Kontrollzeiten geändert wird, wenn ein ausgeglichenes Ist-/Soll-Zuführmengenverhältnis insbesondere während eines im wesentlichen störgrößenfreien Verfahrensbetriebs ermittelt wird.

7. Verfahren nach einem der vorstehenden Ansprüche, wobei die regelungsgemäße Beeinflussung des Durchtrittsquerschnitts und der Taktung erst ausgeführt wird, sollte ein zeitlicher Anteil des Zuführintervalls einer Taktung kleiner 80% oder 90% sein.

8. Vorrichtung (1) zum Mischen wenigstens zweier flüssiger Komponenten (A; B), wie Zwei- oder Mehrkomponentenmischer eines Zwei- oder Mehrkomponentennassbeschichtungssystems, umfassend:
- Leitungssystem zum getrennten Zuführen der wenigstens zwei Komponenten unter Hydraulikdruck, wobei das Leitungssystem eine Stammleitung (15) für eine Stammkomponente (A) oder ein Stammkomponentengemisch und eine in die Stammleitung (15) mündende Zulaufleitung (17) für eine Zulaufkomponente (B) umfasst;
- ein Ein-/Aus-Taktventil (35) zum Schließen oder Öffnen der Zulaufleitung (17) und zum diskontinuierlichen Zuführen der Zuführkomponente (B);
- eine Drosseleinrichtung (33) zum Verändern des Durchtrittsquerschnitts der Zulaufleitung (17);
- einen Durchflussmengenmesser (31) zum Erfassen einer Ist-Durchflussmenge der Zuführkomponente (B), und
- eine Regelung der Durchflussmenge der Zuführkomponente (B),
**dadurch gekennzeichnet, dass** sie einen die Drosseleinrichtung (33) betätigenden Stellantrieb umfasst und die Regelung sowohl den Stellantrieb als auch das Ein-/Aus-Taktventil (35) derart ansteuert, dass zur regelungsgemäßen Änderung der Durchflussmenge der Durchtrittsquerschnitt der Zulaufleitung (17) und eine Taktung der diskontinuierlichen Zuführung beeinflusst werden.

9. Vorrichtung (1) nach Anspruch 8, **dadurch gekennzeichnet, dass** die Drosseleinrichtung (33) in Zuführrichtung strömungsauf- oder -abwärts des Ein-/Aus-Taktventils (35) angeordnet ist oder die Drosseleinrichtung (33) und das Ein-/Aus-Taktventil (35) in einem gemeinsamen Bauteil vereint sind.

10. Vorrichtung (1) nach Anspruch 8 oder 9, **dadurch gekennzeichnet, dass** das Ein-/Aus-Taktventil (35) pneumatisch angesteuert ist.

11. Vorrichtung (1) nach einem der Ansprüche 8 bis 10, **dadurch gekennzeichnet, dass** sie zum Durchführen des nach einem der Ansprüche 1 bis 7 definierten Verfahren ausgelegt ist.

## Claims

1. A method for mixing at least two liquid components (A; B) in particular of a two- or multi-component wet coating system, wherein:
- a feed component (B) under a hydraulic pressure particularly set at constant is fed discontinuously through a variable passage cross-section to a parent component (A) under a hydraulic pressure particularly set at constant;
- an actual feed quantity of the feed component (B) is detected, and
- the feed quantity of the feed component (B) is regulated with respect to a target feed quantity for the feed component (B) in such a way that a timing cycle of the discontinuous feed and the passage cross-section for the feed component (B) are influenced.

2. The method according to claim 1, wherein the timing cycle comprises a temporal sequence of a feed interval and a feed pause following the latter and is influenced in a control-based manner in such a way that
- i) in the case of an overshoot of the target feed quantity, the duration of the feed interval is increased at the expense of a reduction in the feed pause, in particular for a following timing cycle, and the passage cross-section is reduced; and/or
- ii) in the case of the actual feed quantity remaining within a predetermined target feed quantity tolerance range after the lapse of a control time or of the ascertainment of an actual feed quantity that is smaller than the target feed quantity and falling in the course of time, the passage cross-section is increased so that the control-based influencing can be initiated according to step i).

3. The method according to claim 1 or 2, wherein the timing cycle begins with the triggering of the feed interval which ends with the triggering of the feed pause when the actual feed quantity reaches or exceeds the target feed quantity.

4. The method according to any one of the preceding claims, wherein at the start thereof, in particular for the initiation of the control, an oversize is or becomes set for the passage cross-section, so that a ratio of the actual feed quantity to the target feed quantity increasing in the course of time is reached, in particular the feed quantity of less than 5 s reaches or exceeds the target feed quantity..

5. The method according to any one of the preceding claims, wherein an actual/target feed quantity ratio is monitored and in the case of an actual feed quantity less than the target feed quantity and/or a reduction of the actual/target feed quantity ratio, the passage cross-section is preferably increased in size in such a way that the actual/target feed quantity ratio increases during the following feed interval.

6. The method according to any one of the preceding claims, wherein the passage cross-section is changed in steps during the feed pause or wherein the passage cross-section is changed during the feed interval after further control times when a balanced actual/target feed quantity ratio is ascertained, in particular during an essentially disruption-free process operation.

7. The method according to any one of the preceding claims, wherein the control-based influencing of the passage cross-section and of the timing cycle is carried out only if a time-related proportion of the feed interval of a timing cycle is less than 80% or 90%.

8. A device (1) for mixing at least two liquid components (A; B), such as a two- or multi-component mixer of a two- or multi-component wet coating system, comprising:
- a line system for the separate feeding of the at least two components under hydraulic pressure, wherein the line system comprises a parent line (15) for a parent component (A) or a parent component mixture and a feed line (17) running into the parent line (15) for a feed component (B);
- an on/off timing valve (35) for closing or opening the feed line (17) and for the discontinuous feed of the feed component (B);
- a throttle device (33) for changing the passage cross-section of the feed line (17);
- a flow quantity meter (31) for detecting an actual flow quantity of the feed component (B), and
- a control of the flow quantity of the feed component (B),
**characterised in that** it comprises an actuator which actuates the throttle device (33) and the control controls both the actuator and the on/off timing valve (35) in such a way that the passage cross-section of the feed line (17) and a timing cycle of the discontinuous feed are influenced for the control-based change of the flow quantity.

9. The device (1) according to claim 8, **characterised in that** the throttle device (33) is disposed, in the feed direction, upstream or downstream of the on/off timing valve (35) or the throttle device (33) and the on/off timing valve (35) are combined in a common component.

10. The device (1) according to claim 8 or 9, **characterised in that** the on/off timing valve (35) is controlled pneumatically.

11. The device (1) according to any one of claims 8 to 10, **characterised in that** it is designed to perform the method defined according to any one of claims 1 to 7.

## Revendications

1. Procédé destiné à mélanger au moins deux composants (A; B) liquides, notamment d'un système de revêtement bicomposants ou multicomposants,
- un composant à alimenter (B) tenu sous une pression hydraulique à réglage notamment constant étant alimenté de manière discontinue dans un composant de base (A) tenu sous une pression hydraulique à réglage notamment constant à travers une section transversale de passage variable ;
- une quantité d'alimentation réelle du composant à alimenter (B) étant détectée et
- la quantité d'alimentation du composant à alimenter (B) étant réglée par rapport à une quantité d'alimentation de consigne pour le composant à alimenter (B), de telle sorte qu'un cadencement de l'alimentation discontinue et la section transversale de passage pour le composant à alimenter (B) soient influencés.

2. Procédé selon la revendication 1, le cadencement étant composé d'une séquence dans le temps d'un intervalle d'alimentation et d'une pause d'alimentation qui y fait suite et étant influencé selon un réglage de telle sorte que
- i) dans le cas d'un dépassement de la quantité d'alimentation de consigne, la durée de l'intervalle d'alimentation est augmentée aux dépens d'une réduction de la pause d'alimentation, notamment pour un cadencement suivant et la section transversale de passage est diminuée ; et/ou
- ii) dans le cas du maintien de la quantité d'alimentation réelle dans une plage de tolérance prédéfinie des quantités d'alimentation de consigne, après écoulement d'un temps de contrôle ou de la détermination d'une quantité d'alimentation réelle inférieure à la quantité d'alimentation de consigne et en baisse dans le temps, la section transversale de passage est agrandie, de sorte que l'influence selon un réglage d'après l'étape i) puisse être initiée.

3. Procédé selon la revendication 1 ou 2, le cadencement commençant au déclenchement de l'intervalle d'alimentation qui se termine au déclenchement de la pause d'alimentation, lorsque la quantité d'alimentation réelle atteint ou dépasse la quantité d'alimentation de consigne.

4. Procédé selon l'une quelconque des revendications précédentes, à son commencement, notamment pour initier le réglage, un surdimensionnement pour la section transversale de passage étant ou allant être réglé, de sorte qu'un rapport croissant dans le temps de la quantité d'alimentation réelle à la quantité d'alimentation de consigne soit atteint, notamment que la quantité d'alimentation atteigne ou dépasse de moins de 5 s. la quantité d'alimentation de consigne.

5. Procédé selon l'une quelconque des revendications précédentes, un rapport entre les quantités d'alimentation réelles/de consigne étant supervisé et dans le cas d'une quantité d'alimentation réelle inférieure à la quantité d'alimentation de consigne et/ou d'une diminution du rapport entre les quantités d'alimentation réelles/de consigne, la section transversale de passage étant agrandie, de préférence de telle sorte que le rapport entre les quantités d'alimentation réelles/de consigne croisse pendant l'intervalle d'alimentation suivant.

6. Procédé selon l'une quelconque des revendications précédentes, la section transversale de passage étant modifiée progressivement pendant la pause d'alimentation ou la section transversale d'alimentation étant modifiée pendant l'intervalle d'alimentation après des temps de contrôle supplémentaires, si un rapport équilibré entre les quantités d'alimentation réelles/de consigne est déterminé, notamment pendant un fonctionnement du procédé sensiblement sans perturbation.

7. Procédé selon l'une quelconque des revendications précédentes, l'influence selon un réglage de la section transversale de passage et du cadencement n'étant réalisée que si une part temporelle de l'intervalle d'alimentation d'un cadencement devait être inférieure à 80 % ou à 90 %.

8. Dispositif (1) destiné à mélanger au moins deux composants liquides (A ; B), comme mélangeur de bicomposants ou de multicomposants d'un système de revêtement bicomposants ou multicomposants, comprenant :
- un système de conduits pour l'alimentation séparée des au moins deux composants sous une pression hydraulique, le système de conduits comprenant un conduit de base (15) pour un composant de base (A) ou un mélange de composants de base et un conduit d'aménagé (17) débouchant dans le conduit de base (15) pour un composant d'amenage (B);
- une soupape (35) d'introduction cadencée/d'évacuation cadencée pour fermer ou pour ouvrir le conduit d'amenage (17) et pour l'alimentation discontinue du composant à alimenter (B) ;
- un système d'étranglement (33) pour modifier la section transversale de passage du conduit d'amenage (17) ;
- un débitmètre (31) pour détecter le débit réel du composant à alimenter (B) et
- un système de réglage du débit du composant à alimenter (B),
**caractérisé en ce qu'**il comprend un actionneur actionnant le système d'étranglement (33) et **en ce que** le système de réglage active aussi bien l'actionneur qu'également la soupape (35) d'introduction cadencée/d'évacuation cadencée, de telle sorte que pour la modification selon un réglage du débit, la section transversale de passage du conduit d'amenage (17) et un cadencement de l'alimentation discontinue soient influencés.

9. Dispositif (1) selon la revendication 8, **caractérisé en ce que** dans la direction d'alimentation, le système d'étranglement (33) est placé en amont ou en aval de la soupape (35) d'introduction cadencée/d'évacuation cadencée ou **en ce que** le système d'étranglement (33) et la soupape (35) d'introduction cadencée/d'évacuation cadencée sont réunis dans un élément constitutif commun.

10. Dispositif (1) selon la revendication 8 ou 9, **caractérisé en ce que** la soupape (35) d'introduction cadencée/d'évacuation cadencée est activée par voie pneumatique.

11. Dispositif (1) selon l'une quelconque des revendications 8 à 10, **caractérisé en ce qu'**il est conçu pour réaliser le procédé défini selon l'une quelconque des revendications 1 à 7.
